# EUROPÄISCHE PATENTSCHRIFT

(11) **EP 2 760 091 B1**
(45) Veröffentlichungstag und Bekanntmachung des Hinweises auf die Patenterteilung: **20.12.2017**
(21) Anmeldenummer: 14000248.6
(22) Anmeldetag: 24.01.2014
(51) Int. Cl.: H02G 3/04

(54) **Kabelschutzrohr zum Aufnehmen von Kabeln**
Cable conduit for cable passage
Cable protection for le passage de cables

(30) Priorität: 28.01.2013 DE 102013001409
(43) Veröffentlichungstag der Anmeldung: 30.07.2014
(73) Patentinhaber: gabo Systemtechnik GmbH, 94559 Niederwinkling (DE)
(72) Erfinder: Karl, Markus, 94327 Bogen (DE); Lederer, Roland, 94374 Schwarzach (DE); Geiger, Alexander, 94559 Niederwinkling (DE)
(74) Vertreter: Schmid, Nils T.F.

(56) Entgegenhaltungen:
- EP-A1- 0 889 566
- EP-A2- 0 889 556
- WO-A1-01/42055
- DE-A1-102006 039 525
- JP-A- H0 974 638
- US-A- 5 505 230
- US-A1- 2005 272 264
- Zur Huntsman ET AL: "News Release RICHTUNGSWEISENDE TPU-INNOVATIONEN FÜR DEN AUTOMOBILMARKT VON HUNTSMAN AUF DER K2013", , 8 October 2013 (2013-10-08), XP055308283, Retrieved from the Internet: URL:http://www.huntsman.com/polyurethanes/ Media Library/global/files/Automotive market_oct08_2013_deu.pdf [retrieved on 2016-10-06]

## Beschreibung

Die Erfindung betrifft ein Kabelschutzrohr, wie ein Kabelkanalrohr, zum Aufnehmen von Kabeln, Kabellehrrohren oder Leitungen, wie elektrische Leitungen, Glasfaserleitungen oder Lichtwellenleiter, insbesondere zur Erdverlegung.

Typische Kabelschutzrohre werden beispielsweise beim Reparieren und Verlegen von Leitungsleerrohren zum Überbrücken eines beschädigten Kabelrohres oder Verbinden von Leerrohren eingesetzt. Außerdem können Kabelschutzrohre abschnittsweise selbst als Leerrohr oder Kabelkanal dienen, durch das im Anschluss an das Verlegen oder zu einem späteren Zeitpunkt elektrische oder optische Leitungen verlegt werden, zum Beispiel Lichtwellenleiter eingeblasen werden. Um das Rohrinnere gegenüber dem Eindringen von Fremdkörpern und Feuchtigkeit abzusichern sind hohe Schließkräfte und eine gute Abdichtung gegenüber dem Rohräußeren wünschenswert. Insbesondere bei Kabelschutzrohren, in die Glasfasern als Lichtwellenleiter eingeblasen werden, sind Verschlusskräfte und Fluiddichtigkeit von herausragender Bedeutung, da während des Einblasens ein pneumatischer Druck von 10 bar oder mehr im Rohr aufgebaut werden muss.

Ein Schutzrohr, dass aus zwei Rohrsegmenten besteht, ist aus DE 3302339 A1 bekannt. Die Rohrsegmente weisen jeweils zwei Anschlussränder auf, von denen einer eine Einsteckkammer ausbildet und der gegenüberliegende einen Einsteckhaken mit zwei Rastnasen. In die Einsteckkammer ist ein Dichtelement eingelegt.

DE 4218526 C3 offenbart ein Rohr mit zwei Halbrohren und einem ein Rastverschluss, der eine Kammer aufweist, in der ein Dichtelement eingesetzt ist. Die Kammer ist bezüglich der Einrastrichtung derart ausgerichtet, dass beim Einrasten und im eingerasteten Montagezustand nur tangentiale Kräfte auf das Dichtelement wirken.

Eine Kabelführung ist in DE 10 2006 039 525 A1 offenbart. US 2005/0272264 A1 offenbart ein Kupplungsstück für Kabelleerrohre.

Bekannte Kabelschutzrohren sind aufwendig in der Herstellung, da zunächst die Rohrteile gefertigt und anschließend die Dichtelemente eingelegt werden müssen. Bei der Montage sind die bekannten Rohre oder Rohrsysteme umständlich zu handhaben und anfällig für Montagefehler, weil mehrere zueinander passende Rohrsegmente zusammengesucht, aneinander positioniert und montiert werden müssen. Das Positionieren ist zudem dadurch erschwert, dass im Bereich der Segmentverbinder und Dichtungen die Rohrwand unregelmäßig nach außen und/oder innen vorspringt. Auch das Durchführen von Leitungen, insbesondere das Einblasen von Lichtwellenleitern in die bekannten Rohre ist dadurch gehemmt, weil sich durchzuführende oder einzublasende Leitungen leicht an den Vorsprüngen verklemmen. Schließlich ist es wünschenswert höhere Einblasdrücke als bisher üblich zu realisieren, denen herkömmliche Kabelschutzrohre mit deren Schließ- und Dichtsystemen nicht Stand halten.

EP 0 889 556 A2 betrifft ein Kabelschutzrohr umfassend zwei Rohrsegmente, die mittels einer Kerbe durch Verschwenken in eine geschlossene Position gebracht werden können, wobei sich die Rohrsegmente in der geschlossenen Position übereinanderschieben.

Es ist Aufgabe der Erfindung die Nachteile des Stands der Technik zu überwinden, insbesondere ein Kabelschutzrohr dahingehend zu verbessern, dass es möglichst leicht und präzise zu montieren sowie kostengünstig herzustellen ist, wobei eine sichere Fluidabdichtung selbst bei hohen Drücken erreicht wird.

Diese Aufgabe wird durch den Gegenstand der unabhängigen Ansprüche gelöst.

Gemäß einem ersten Aspekt der Erfindung umfasst ein Kabelschutzrohr zum Aufnehmen von Kabeln, wie elektrische Leitungen, Glasfaserleitungen oder Lichtwellenleiter, zwei Rohrsegmente, die in einem offenen Vormontagezustand freie Fügeränder aufweisen und aus dem Vormontagezustand in einen Montageendzustand verbringbar sind, in dem die Fügeränder zum Bilden des geschlossenen Kabelschutzrohrs aneinandergefügt sind. Erfindungsgemäß umfasst das Kabelschutzrohr ein die zwei Rohrsegmente beweglich koppelndes Scharnier, das die Fügeränder auf einer vordefinierten Schwenkbahn in den Montageendzustand führt. Insbesondere sind in dem offenen Vormontagezustand die entlang der Längsachse des Kabelschutzrohrs verlaufenden Fügeränder der Rohrsegmente in Rohrumfangsrichtung in einem Abstand zueinander angeordnet. Um in den Montageendzustand zu gelangen, werden die Rohrsegmente verschwenkt und die Fügeränder somit aufeinander zu bewegt, so dass das Kabelschutzrohr einen geschlossenen Rohrumfang aufweist. Beim Aneinanderfügen werden Fügeränder miteinander fest verbunden, wie verrastet oder verhakt.

Die Kopplung der Rohrsegmente mittel eines Scharniers erleichtert die Handhabung und Montage des Kabelschutzrohrs erheblich, da es sich ohne große Mühe, schnell und präzise positionieren lässt und durch Schließen der Rohrsegmente der Montageendzustand erreicht wird. Über die festgelegte Schwenkachse des Scharniers, erreichen die aneinanderzufügenden Rohrsegmente eine vorbestimme Einrastposition ohne jedweden Justieraufwand eines Monteurs, was die Arbeit erleichtert und Zeit spart.

Bei einer bevorzugten Ausführung sind die zwei Rohrsegmente und das Scharnier aus einem Stück gefertigt, insbesondere als ein Kunststoffstück gespritzt. Insbesondere besteht das Kabelschutzrohr aus genau zwei Rohrsegmenten und dem Scharnier. Die einstückige Ausführung lässt sich besonders kostengünstig fertigen und reduziert zudem Logistikaufwand und Montagekomplexität, da alle Komponenten des Kabelschutzrohrs in einem zusammenhängenden Teil gehandhabt werden.

Bei einer bevorzugten Ausführung sind die zwei Rohrsegmente kreisbogenförmige Teilschalen, vorzugsweise Halbschalen. Der gleichmäßige Aufbau des Kabelschutzrohres maximiert die auf das Scharnier aufbringbaren Hebelkräfte, wodurch beim Schließen der Rohrsegmente eine geringere Handkraft aufgebracht werden muss. Insbesondere sind die Rohrsegmente im Wesentlichen starre Kunststoffschalen, die sich gegenüber manuellen Kräften im Wesentlichen biegesteif verhalten. Insbesondere beträgt das Verhältnis von Rohraußendurchmesser zu Wandstärke des Kabelschutzrohrs etwa zwischen 8:3 und 20:3, insbesondere zwischen 10:3 und 16:3, vorzugsweise etwa 13:3. Das Kabelschutzrohr erstreckt sich im Montageendzustand geradlinig entlang einer Längsachse, insbesondere als Rundrohr, wobei die Längsachse mit der Rotationssymmetrieachse des Rundrohrs zusammenfallen kann.

Bei einer bevorzugten Ausführung weisen die zwei Rohrsegmente jeweils einen der Fügeränder zum Befestigen der Rohrsegmente aneinander auf, der sich im Wesentlichen parallel zur Längsachse des Kabelschutzrohrs erstreckt. Insbesondere ist den Fügerändern diametral gegenüberliegend das Scharnier ausgebildet. Insbesondere bilden die Fügeränder im Vormontagezustand zueinander gewandte, gerade Längsränder der Rohrsegmente, die sich entlang des gesamten Kabelschutzrohrs erstrecken.

Bei einer bevorzugten Ausführung weist wenigstens einer der Fügeränder wenigstens eine Rastnase auf, die insbesondere mit einer Gegenrastnase des anderen Fügerands derart formkomplementär ausgebildet ist, das die Rastnasen im Montageendzustand verriegelnd verhakt sind. Insbesondere sind wenigstens eine Rastnase und eine Gegenrastnase als Widerhaken, vorzugsweise mit formkomplementären, in verschiedene Richtungen weisenden Keilen der Widerhaken, ausgebildet. Mit diesen Maßnahmen wird erreicht, dass die Fügeränder sicher miteinander verbunden sind.

Bei einer bevorzugten Ausführungsform ist das Scharnier durch ein Deformationsband, wie ein Filmscharnier gebildet, das die zwei Rohrsegmente im Vormontagezustand stabil aneinander koppelt und im Montageendzustand plastisch elastisch deformiert ist. Insbesondere ist das Scharnier derart ausgebildet, dass im Vormontagezustand die Rohrsegmente im Wesentlichen starr miteinander verbunden sind und insbesondere ein konstanter Abstand zwischen den freien Fügerändern besteht. Das Verschwenken der Rohrsegmente erfolgt überwiegend, insbesondere zu wenigstens 60 Prozent des Schwenkwegs, durch plastische Deformation des Scharniers. Insbesondere ist das Scharnier als Boden einer Ausnehmung in der Wandung der Rohrsegmente ausgebildet. Vorzugsweise ist der Boden der Ausnehmung rinnenförmig ausgebildet, so dass die Wandstärke der Rohrsegmente im Bereich der Ausnehmung hin zu einer Stelle geringster Wandstärke abnimmt. Dadurch lässt sich die Position der Schwenkachse präzise voreinstellen. Insbesondere ist die Ausnehmung im Querschnitt trichterförmig oder Y-förmig. Die Trichterform erleichtert ein Verschwenken der Rohrsegmente über die Montageendposition in eine jenseits der Montageendposition liegenden Einrastposition der Fügeränder.

Bei einer bevorzugten Ausführung teilt das Scharnier im Montageendzustand den Rohrsegmenten elastische Rückstellkräfte mit, die in Umfangsrichtung wirken und/oder die Fügeränder auseinander ziehen, wobei insbesondere die Rastnasen der Fügeränder ineinander greifen, um die elastischen Rückstellkräfte zu erhalten. Insbesondere wirken zwischen den Fügerändern Zugkräfte im Umfangsverlauf der Rohrsegmente. Mit Hilfe der elastischen Rückstellkräfte werden die Fügeränder in einen Verhakungseingriff gezogen, was zu einer erhöhten Dichtwirkung zwischen den Fügerändern führt. Des Weiteren wird ein versehentliches Öffnen des Rohrs erschwert, da zunächst die Fügeränder entgegen der Öffnungsrichtung und entgegen der elastischen Rückstellkraft aufeinander zu bewegt werden müssen, um den Rasteingriff zu lösen. Vorzugsweise sind die Rastnasen keilförmig ausgebildet, wobei die Keilflächen zur Umfangsrichtung derart geneigt sind, dass die elastischen Rückstellkräfte die Rastnasen in einen tieferen Rasteingriff ziehen, insbesondere durch eine Radialrichtungskomponente normal zu den Keilflächen.

Bei einer bevorzugten Ausführung weist das Scharnier eine Materialstärke von weniger als einem Drittel, vorzugsweise weniger als einem Viertel der Wandstärke des Kabelschutzrohrs auf. Überraschenderweise stellte sich für diese spezifische Wandstärkeverhältnisse eine ausreichend hohe Druckfestigkeit und dennoch gute Schwenkbarkeit des Scharniers heraus.

Bei einer bevorzugten Ausführung ist die Schwenkbahn durch die Schwenkachse des Scharniers definiert, die parallel zu den Fügerändern und/oder zur Längsachse des Kabelschutzrohrs verläuft. Insbesondere liegt die Schwenkachse innerhalb der Wandung des Kabelschutzrohrs.

Bei einer bevorzugten Ausführung definiert das Scharnier im Vormontagezustand eine sich längs des Kabelschutzrohrs erstreckende Kabeleinlegeöffnung, deren Öffnungsbreite größer als der maximale Innendurchmesser des geschlossenen Kabelschutzrohrs ist. Insbesondere ist die Kabeleinlegeöffnung durch die im Vormontagezustand freien Fügeränder der zwei Rohrsegmente begrenzt. Mit dieser Maßnahme lässt sich die Montierbarkeit des Kabelschutzrohrs erheblich verbessern, da die Einlegeöffnung breiter als der eigentliche Innendurchmesser des Rohrs ist.

Bei einer bevorzugten Ausführung, die auch einen weiteren unabhängigen Aspekt der Erfindung darstellen kann, weist das Kabelschutzrohr ein Scharnier auf, das beim Verbringen der zwei Rohrsegmente von dem Vormontagezustand in den Montageendzustand derart plastisch elastisch verformt wird, dass im Montageendzustand die aneinander gefügten Fügeränder auseinander gezogen werden. Mit der erfindungsgemäßen Maßnahme können hohe Schließkräfte und eine gute Fluiddichtigkeit zwischen den Fügerändern erzielt werden. Des Weiteren bewirt die Vorspannung des Kabelschutzrohrs in Öffnungsrichtung eine Erhöhung der Formstabilität. Es treten somit kaum Relativbewegungen zwischen den Rohrsegmenten oder angrenzenden Dichtungen auf, wenn mit hohem Druck Leitungen eingeblasen werden, wodurch sich eine bessere Dichtwirkung und ein konstantes Einblasverhalten ergeben.

Bei der bevorzugten Ausführung sind ein Übergreiffügerand des einen Rohrsegments bzw. ein Untergreiffügerand des anderen Rohrsegments derart bezüglich der vordefinierten Schwenkbahn unterdimensioniert bzw. überdimensioniert, das im Montageendzustand einer der ineinandergreifenden Fügeränder bezüglich der vordefinierten Schwenkbahn in Radialrichtung elastisch geweitet oder gestaucht ist. Mit dieser Maßnahme können Schnapp- und Verschlusskräfte in Radialrichtung bereitgestellt werden, so dass auch bei unpräziser Handhabung sicher der Montageendzustand erreicht wird, weil ab einem gewissen Schwenkpunkt die Fügeränder selbsttätig in den gegenseitigen Rasteingriff einschnappen.

Bei einer bevorzugten Ausführungsform ist im Montageendzustand einer der Fügeränder aus der Schwenkbahn ausgelenkt, so dass beim Einnehmen des Montageendzustands die Rohrsegmente elastisch nach radial außen geweitet und nach radial innen gestaucht werden. Insbesondere wird eines der Rohrsegmente geweitet, wobei das andere Rohrsegment gestaucht wird. Insbesondere sind die Rohrsegmente in der Montageendposition in Radialrichtung gestaucht und/oder geweitet.

Bei einer bevorzugten Ausführung bilden die Rohrsegmente an den sich zuzuwendenden Fügerändern jeweils wenigstens eine Rastnase und wenigstens einen Anlaufabschnitt aus, wobei zum gegenseitigen Eingriff der Rastnasen die Fügeränder an deren Anlaufabschnitten entlang in eine Einrastposition gleiten, wobei insbesondere der wenigstens eine Anlaufabschnitt relativ zur Schwenkbahn geneigt ist. Insbesondere ist der jeweilige Anlaufabschnitt derart geneigt, dass dieser dem gegenüberliegenden Fügerand des anderen Rohrsegments zugewandt ist. Die Anlaufabschnitte vereinfachen die Montage, da die Rohrsegmente selbst bei Über- oder Unterdimensionierung zur vordefinierten Schwenkbahn oder zum gegenüberliegenden Rohrsegment leicht eine zugewandte Angriffsfläche bereitstellen, so dass diese geschlossen werden können und in eine Einrastposition rutschen, ohne dass die Fügeränder manuell zueinander ausgerichtet werden müssten.

Bei einer bevorzugten Ausführung, die auch einen unabhängigen Aspekt der Erfindung darstellen kann, ist an einem der Fügeränder eine Dichtung vorgesehen, die zumindest abschnittsweise die Außenseite des Kabelschutzrohres bildet. Insbesondere setzt die Dichtung den Verlauf der Außenseite des Kabelschutzrohrs kontinuierlich, vorzugsweise stetig fort. Das Kabelschutzrohr lässt sich auf Grund der Dichtschicht an der Außenseite, die eine Reibungserhöhung bewirkt, leicht und präzise positionieren. Des Weiteren ist eine Abdichtungswirkung gegenüber angrenzenden Kabelschutzrohren oder Kabelkanälen erreicht.

Bei einer bevorzugten Ausführung ist die Dichtung mit wenigstens einem der Rohrsegmente einstückig ausgebildet ist. Vorzugsweise ist die Dichtung in einem Zwei-Komponenten-Spritzgussverfahren an das Rohrsegment angespritzt. Vorzugsweise besteht das Kabelschutzrohr aus den Rohrsegmenten, dem Scharnier und der Dichtung, die in einem Stück integral gefertigt sind. Die einstückige Fertigung erlaubt niedrige Produktions- und Logistikkosten. Des Weiteren wird eine verbesserte Dichtwirkung zwischen den Fügerändern erreicht, da die Dichtung einstückig mit dem Kabelschutzrohr ausgebildet ist. Vorzugsweise umfasst die Dichtung ein Elastomer.

Bei einer bevorzugten Ausführung weist eines der Rohrsegmente eine zum Äußeren des Kabelschutzrohrs hin freiliegende Aufnahme für die Dichtung auf. Die zur Rohräußeren weisende freiliegende Aufnahme lässt sich in einem Spritzgussverfahren besonders effizient realisieren und erhöht die Komplexität der Spritzgussform kaum. Insbesondere verläuft die Dichtung parallel zu den Fügerändern und/oder der Längsachse des Kabelschutzrohrs. Insbesondere erstreckt sich die Aufnahme über eine Umfangslänge von etwa 3 bis 15 Prozent, vorzugsweise 6 bis 11 Prozent, des Kabelschützrohrumfangs.

Bei einer bevorzugten Ausführung ist die Aufnahme durch wenigstens einen Abschnitt reduzierter Wandstärke eines der Rohrsegmente gebildet. Vorzugsweise ist die Aufnahme durch zwei Abschnitte reduzierter Wandstärke eines der Rohrsegmente gebildet. Insbesondere ist die Aufnahme am Untergreiffügerand gebildet. Insbesondere bilden die Abschnitte reduzierter Wandstärke eine Innenstufe und eine Außenstufe eines Stufenprofils in der Wandung des Rohrsegments, zwischen denen insbesondere ein Hinterschnitt gebildet ist. Über die Abstufung der Aufnahme lässt sich eine Verzahnung der Dichtkomponente mit dem Rohrsegment erreichen. Außerdem kann somit ein großes Dichtelement eingesetzt werden, ohne die Wandstärke des Kabelschutzrohres im Bereich der Dichtung zu erhöhen.

Bei einer bevorzugten Ausführung geht ein durch die Dichtung gebildeter Außenseitenbereich des Kabelschutzrohrs in einem durch eines der Rohrsegmente gebildeten Außenseitenbereich des Kabelschutzrohrs kontinuierlich, vorzugsweise stetig über.

Insbesondere umfasst eines der Rohrsegmente eine Eindrücknase zum elastischen Verformen der Dichtung im Montageendzustand. Vorzugsweise bilden eine Außenseite der Rastnase und der Anlaufabschnitt die Eindrücknase. Insbesondere ist zwischen der Eindrücknase und der Dichtung ein Dichtkontaktabschnitt über eine Länge von wenigstens der radialen Höhe der Dichtung gebildet, vorzugsweise über eine Länge von mehr als dem 1,4-fachen der radialen Höhe der Dichtung. Insbesondere ist die radiale Höhe der Dichtung geringer als die Wandstärke des Kabelschutzrohrs. Insbesondere beträgt die radiale Höhe der Dichtung weniger als 80 % der Wandstärke.

Bei einer bevorzugten Ausführungsform, die auch einen unabhängigen Aspekt der Erfindung darstellen kann, umfasst eines der Rohrsegmente einen Übergreiffügerand und das andere Rohrsegment einen Untergreiffügerand, die im Montageendzustand derart ineinandergreifen, dass an der Außenseite des Kabelschutzrohrs ein im Wesentlichen idealzylindrischen Übergang zwischen den Rohrsegmenten gebildet ist und/oder die Rohrsegmente einen im Wesentlichen idealzylindrischen Kabelaufnahmeraum begrenzen. Als Kabelaufnahmeraum ist insbesondere das durch eine jeweilige Innenwandung der Rohrsegmente definierte Innere des Kabelschutzrohres zu verstehen, das zur Aufnahme einer Leitung vorgesehen ist. Es zeigte sich, dass sich das Kabelschutzrohr mit zylindrischer Außenseite besser mit anderen Standardkomponenten des Rohrsystems kombinieren lässt und es sich gegenüber Anschlusskomponenten leichter abdichten lässt.

Insbesondere entspricht der Rohrinnendurchmesser im Bereich der Fügeränder dem Rohrinnendurchmesser des an dem Fügerand angrenzenden Bereichs des Kabelschutzrohrs.

Bei einer bevorzugten Ausführungsform entspricht der Rohraußendurchmesser im Bereich des Fügerands dem Rohraußendurchmesser im übrigen Verlauf des Kabelschutzrohrs.

Bei einer bevorzugten Ausführungsform entspricht die Wandstärke des Kabelschutzrohrs im Bereich der Fügeränder der Wandstärke eines jeweiligen Rohrsegments jenseits der Fügeränder.

Bei einer bevorzugten Ausführungsform bilden die Rohrsegmente jeweils eine das Rohrinnere begrenzende Innenwandung sowie eine dem Rohräußeren zugewandte Außenwandung aus, wobei die Innenwandungen und/oder die Außenwandungen der Rohrsegmente im Montageendzustand im Bereich des Fügerands stufenlos in einander übergehen, wobei insbesondere die Innenwandungen vorsprungsfrei sind.

Bei einer oder mehreren der vorgenannten spezifischen Ausführungen ergibt sich der Vorteil, dass sich Leitungen, insbesondere Lichtwellenleiter, schneller einblasen lassen, weil es zu keinen Sperrungen an der Rohrinnenwand kommt, die im Wesentlichen kontinuierlich kreisrund verläuft, und wegen der guten Abdichteigenschaften höhere Einblasdrücke eingesetzt werden können.

Weitere Vorteile, Eigenschaften und Merkmale der Erfindung werden durch die folgende Beschreibung bevorzugter Ausführungen der Erfindung anhand der beiliegenden Zeichnungen deutlich, in denen zeigen:
- Figur 1: eine perspektivische Ansicht eines ersten Ausführungsbeispiels der Erfindung;
- Figur 2: eine Vorder- oder Querschnittsansicht des Kabelschutzrohrs gemäß Figur 1 in einem Vormontagezustand;
- Figur 3: eine Draufsicht oder Querschnittsansicht des Kabelschutzrohrs gemäß Figur 1 in einem geschlossenen Montagezustand;
- Figur 4: eine perspektivische Ansicht eines zweiten Ausführungsbeispiels eines erfindungsgemäßen Kabelschutzrohrs;
- Figur 5: eine Draufsicht oder Querschnittsansicht des Kabelschutzrohrs gemäß Figur 4 in einem offenen Vormontagezustand; und
- Figur 6: eine Draufsicht oder Querschnittsansicht des Kabelschutzrohrs gemäß Figur 5 in einem geschlossenen Montagezustand.

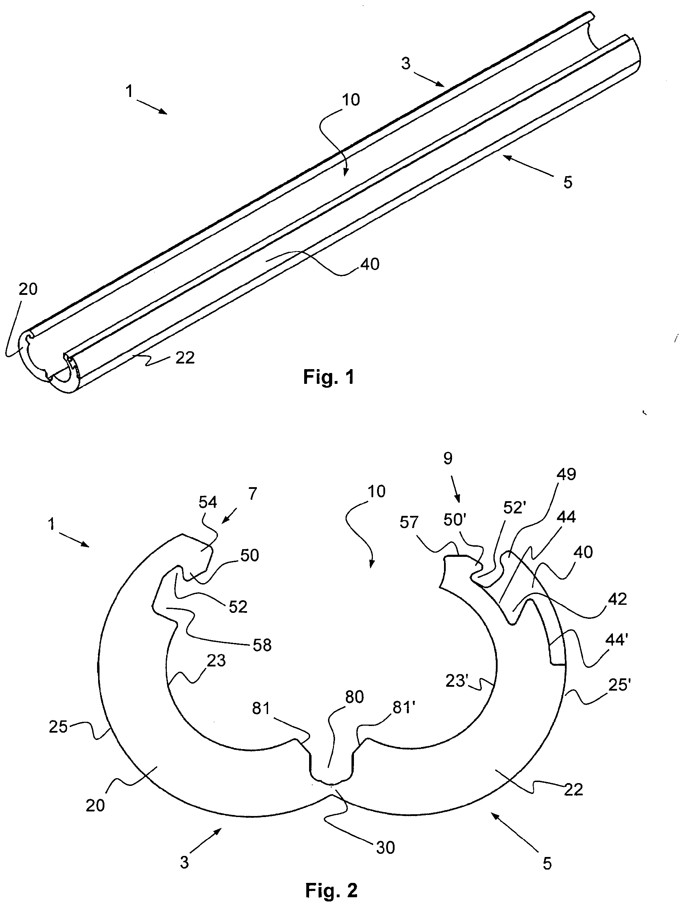

Die Figuren 1 bis 3 zeigen ein erstes Ausführungsbeispiel eines erfindungsgemäßen Kabelschutzrohrs oder Rohrs, das im Allgemeinen mit der Bezugsziffer 1 versehen ist.

Das Kabelschutzrohr 1 besteht aus zwei Rohrsegmenten 3, 5, die als Halbschalen 20, 22 ausgebildet sind, wie sie bei Längsschnitt eines Hohlzylinders entstehen. Das Kabelschutzrohr kann auch eine andere Segmentaufteilung des Rohrhohlzylinders, wie eine Eindrittelschale und eine Zweidrittelschale oder andere Aufteilungen, die zusammen ein Vollrohr bilden, aufweisen.

Die Rohrsegmente 3, 5 sind integral als ein Kunststoffteil gefertigt, insbesondere aus Polyamid spritzgegossen.

Die Halbschalen 20, 22 sind über einen Materialsteg längs der Erstreckungsrichtung des Rohrs starr miteinander verbunden, wobei der Materialsteg bei elastisch-plastischer Deformation die Funktion eines Scharnier 30 übernimmt. Die Halbschalen 20, 22 umfassen jeweils einen im Querschnitt kreisabschnittsförmigen Rohrinnenwandabschnitt 23, 23' sowie einen kreisabschnittsförmigen Rohraußenwandabschnitt 25, 25'. Dem Scharnier 30 gegenüberliegend weisen die jeweiligen Halbschalen 20, 22 ein freier Fügerand 7, 9 auf, an dem die Halbschalen miteinander fest verbunden werden können. Die Fügeränder 7, 9 liegen sich im Wesentlichen in der Umfangsrichtung des Rohrs gegenüber. Der Fügerand 7 der Halbschale 20 ist als Übergreiffügerand mit einem radial nach innen weisenden Profil aus Ausnehmungen und Vorsprüngen in der Wandung des Rohrsegments gebildet sowie der Fügerand 9 der Halbschale 22 als Untergreiffügerand durch ein radial nach außen weisendes Profil. Die Fügeränder 7, 9 umfassen jeweils einen Widerhaken oder Rastnase 50, 50' sowie einen unmittelbar im Umfangsverlauf des Rohrs an die Rastnase anschließenden Hinterschnitt 52, 52'. Die jeweilige Rastnase 50, 50' einer der Halbschalen 20, 22 ist jeweils formkomplementär zur Gegenrastnase 50', 50 und dem Hinterschnitt 52', 52 der jeweils anderen Halbschale 22, 20 ausgebildet.

Dabei ist der Hinterschnitt 52 der Halbschale 20 als Teil einer Aussparung in der Rohrinnenwand und die Rastnase 50 als relativ zum gegenüberliegenden Fügerand übergreifender Konturvorsprung ausgebildet. Korrespondierend ist der Hinterschnitt 52' in der Halbschale 22 als Aussparung in der Rohraußenwand sowie die Rastnase 50' als Untergreifelement geformt.

Der Fügerand 9 der Halbschale 22 setzt sich im Querschnitt betrachtet im Wesentlichen konzentrisch zu einer Rohrmittelachse fort und bildet in Umfangsrichtung and den Hakungshinterschnitt 52' eine Aufnahme für eine Dichtung 40 aus. Die Aufnahme bildet dem Hakungshinterschnitt 52' gegenüberliegend einen Hinterschnitt 42 zur Befestigung des Dichtelements 40 aus.

Die Aufnahme bildet im Querschnitt betrachtet in der Rohraußenwand 25' des Rohrsegments 5 einen z-förmiger Absatz oder Stufenprofil mit einer radial außen liegenden Stufe 44' und einer radial innen liegenden Stufe 44. Die Stufen 44 und 44' überschneiden sich in Umfangsrichtung des Rohrsegments 5, wodurch der Hinterschnitt 42 ist, in den die Dichtung 40 hineinragt.

Die Dichtung 40 ist im Bereich der Aufnahme an das Rohrsegment 5 in einem zweiten Schritt eines Zwei-Komponenten-Spritzgussverfahrens angespritzt und somit einstückig mit diesem ausgebildet. Ingesamt sind also alle Bestandteile des Rohrs einstückig aus einem Teil gebildet.

Die Dichtung 40 nimmt an deren Außenseite den kreisbogenförmigen Verlauf der Rohraußenwand 25' auf und setzt diesem im Bereich des Fügerands der Halbschale 22 fort. Der Übergang der Außenseite der Dichtung 40 hin zur kreisbogenförmige Kontur des Rohraußenwandabschnitts 25' der Halbschale 22 ist kontinuierlich und stufenfrei. An der dem Fügerand 7 des anderen Rohrsegments 3 zugewandten Stirnseite der Dichtung ist eine Dichtlippe 49 ausgebildet.

Im Umfangsverlauf schließt an den Dichtbereich unmittelbar die als Absatz in der Rohraußenwand 25' des Rohrsegments 5 gebildete Rastnase 50' an. Die Nase auf der dem Fügerand des anderen Rohrsegments 3 zugewandten Seite einen Anlaufabschnitt 57 aus, längs dem die Wandstärke des Fügerands 9 abnimmt.

Der im Vormontagezustand freie Fügerand 7 der Halbschale 20 erstreckt sich wie der Fügerand 9 parallel zur Längsachse des Rohrs und gegenüberliegend zum Fügerand 9 der Halbschale 22. Der Fügerand 7 der Halbschale 20 bildet an einer dem gegenüberliegenden Fügerand 9 zugewandten Schmalseite des Fügerands eine Eindrücknase 54 aus, die im geschlossenen Montageendzustand des Kabelschutzrohrs mit der Dichtung 40 zwei im Wesentlichen in einem rechten Winkel zueinander angeordnete Dichtflächen 48 ausbildet. Die elastischen Dichtkräfte der Dichtung 40 wirken auf Grund der Pfeilform der Eindrücknase aufeinander zu, wodurch ein Selbstverstärkungseffekt der Dichtung eintritt.

Die maximale radiale Höhe der Dichtung 40 ist geringer als die Wandstärke des Kabelschutzrohrs 1 und beträgt weniger als 80 Prozent der Wandstärke. Der zwischen der Eindrücknase 54 und der Dichtung 40 gebildete Dichtkontaktabschnitt 48 erstreckt sich über eine Länge von wenigstens der radialen Höhe der Dichtung, vorzugsweise über mehr als das 1,4-fache der radialen Höhe der Dichtung.

Des Weiteren weist die Rastnase 50 am Fügerand 7 vom gegenüberliegenden Fügerand 9 in Umfangsrichtung des Rohrs weg. Die Kontur des zum Rohrinneren weisenden Schalenprofils des Rohrsegments im Bereich des Fügerands 7 bildet im Anschluss an die Rastnase 50 einen Hinterschnitt 52, der im Wesentlichen formkomplementär zur Rastnase 50' der gegenüberliegenden Halbschale 22 gebildet ist. Dabei kann der Hinterschnitt 52 leicht unterdimensioniert relativ zur Rastnase 50' sein, um elastische Anpresskräfte zu erzeugen. Ebenso kann der Hinterschnitt 52' des Fügerands 9 etwas kleiner als die Rastnase 50 ausgebildet sein, um zusätzliche elastische Verschlusskräfte zu erzeugen. Eine Einrastöffnung 58 ist als zum Rohrinnern weisende Ausnehmung geformt und wird beim Verschließen des Rohrs unter einem Übergriff der Halbschale 20 über die Halbschale 20 solange in Richtung der Rastnase 50 geschoben, bis die Rastnase 50, 50' einander passiert haben, sich die beim Übergreifen aufgebauten elastischen Schalenverformungskräfte wenigsten teilweise lösen und die Rastnase 50, 50' miteinander und mit den korrespondierenden Hinterschnitten 52, 52' in Eingriff bringen.

Die Rastnasen und Gegenrastnasen 50, 50', 51, 51' bilden jeweils eine Hakenkontaktfläche aus, die einen spitzen Winkel, vorzugsweise einen Winkel kleiner 70°, mit der Rohrumfangsrichtung derart einschließt, dass an den Kontaktflächen von Rastnasen gegenüberliegender Fügeränder elastische Vorspannkräfte mit Radialrichtungskomponente zwischen den Fügerändern übertragen werden.

Um zum Erreichen des Montagezustands, also der geschlossenen Rohrstellung, die Schwenkbewegung der Halbschalen zu ermöglichen, wird das Scharnier 30, das die Halbschalen 20, 22 miteinander koppelt, als Deformationsband mit einer geringeren Materialstärke als die Halbschalen 20, 22 ausgebildet. Für eine Schwenkbewegung der Halbschalen 20, 22 aufeinander zu wird das Deformationsband plastisch und elastisch verformt. Die Schwenkachse des Scharniers verläuft innerhalb des Wandmaterials der Rohrsegmente, im Bereich des Materialstegs und parallel zu den Fügerändern 7, 9 und der Rohrerstreckung. Die Schwenkachse definiert eine Schwenkbahn, entlang der die Rohrsegmente in den Montageendzustand und einen Eingriff miteinander gebracht werden können.

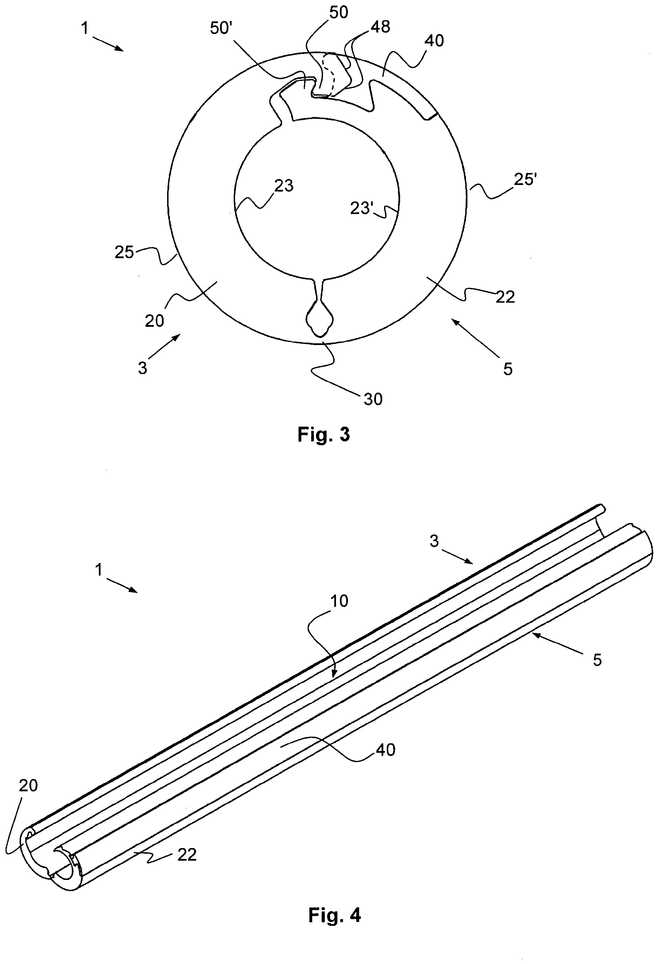

Im offenen Vormontagezustand ist, wie die Figuren 1 und 4 zeigen, zwischen den Hakenrändern der Rohrsegmente 3, 5 eine zentrale Kabeleinlegeöffnung 10 definiert. Die lichte Breite der Kabeleinlegeöffnung beträgt im Querschnitt betrachtet etwa das 1,3- bis 1,5-fache des Rohrinnendurchmessers.

In Figur 3 ist der geschlossene Montageendzustand des Kabelschutzrohrs 1 gezeigt, in dem die Rastnasen 50, 50' der Fügeränder 7, 9 miteinander in einem Schnappeingriff stehen. Das Schwenkgelenk 30 ist im Montagezustand sowohl plastisch als elastisch deformiert. Auf Grund der elastischen Deformation des Schwenkgelenks wirkt eine elastische Rückstellkraft oder ein Rückstellmoment am Schwenkgelenk, wodurch in Rohröffnungsrichtung wirkende Kräfte die Fügeränder 7, 9 und die miteinander im Eingriff stehenden Rastnasen 50, 50' auseinanderziehen. Dadurch werden die keilförmigen Rastnasen 50, 50' in die Hinterschnitte 52, 52' hineingetrieben, womit sich der Verschluss weiter verfestigt.

Um von dem Vormontagezustand in den Montagezustand zu gelangen, wird das Rohr 1 beispielsweise mittels eines Schließwerkzeugs, wie einer Zange zusammengedrückt, bis die Eindrücknase 54 zunächst mit der Anlaufabschnitt 57 der an der gegenüberliegenden Halbschale 22 ausgebildeten Rastnase 50' in Kontakt kommt. Die Eindrücknase gleitet an der Rastnase entlang, wobei wegen des geringeren radialen Abstands zwischen Eindrücknase und der Schwenkachse des Scharniers 30 im Vergleich zum Anlaufabschnitt 57 die Halbschale 20 aufgebogen und die Halbschale 22 komprimiert wird. Sobald die Rastnase 50, 50' einander passiert haben und die Rastnase 50' in die Verhakungsöffnung 58 eintritt, wird die Deformationsspannung der Halbschalen 20, 22 teilweise oder vollständig gelöst. Je nach Auslegung der radialen Dimensionen an den Fügerändern der Halbschalen 20, 22 kann eine elastische Vorspannung in Radialrichtung auch im Montagezustand erhalten sein.

Mit dem Einschnappen der Rastnasen 50, 50' in die jeweils vorgesehenen Hinterschnitte 52, 52' dringt die Eindrücknase 54 auch in das Dichtelement 40 ein und deformiert dieses elastisch. Die über das Dichtelement 40 in Umfangsrichtung vorstehende Dichtlippe 48 bewirkt, dass an der keilförmigen Eindrücknase 54 gleichmäßig verteilte Dichtkräfte herrschen. Des Weiteren kann die radial äußere Keilfläche des Widerhakens 50' der untergreifenden Halbschale 22 derart in Radialrichtung größer dimensioniert sein, dass die gegenüberliegende Kontaktfläche des Hinterschnitts 52 eine in Radialrichtung wirkende Vorspannkraft erfährt.

Um einen Übergriff der Halbschale 20 über die Halbschale 22 zu erreichen, wird die Halbschale 20 sobald ein Gleiteingriff zwischen den Rohrsegementen 3, 5 über die Gleitfläche 57 und den Fügerand 7 besteht nach radial außen elastisch aufgedehnt und/oder die Halbschale 22 radial komprimiert.

Im geschlossenen Zustand sind sowohl der Außenumfang des Rohrs wie auch der im Inneren des Rohrs gebildete Kabelaufnahmeraum im Wesentlichen idealzylindrisch. Insbesondere sind an der Rohrinnenwand keine nach radial innen weisenden Vorsprünge oder Absätze, so dass das Einblasen von Leitungen sowie die Abdichtung relativ zu innenliegenden Kabelrohren erheblich erleichtert ist.

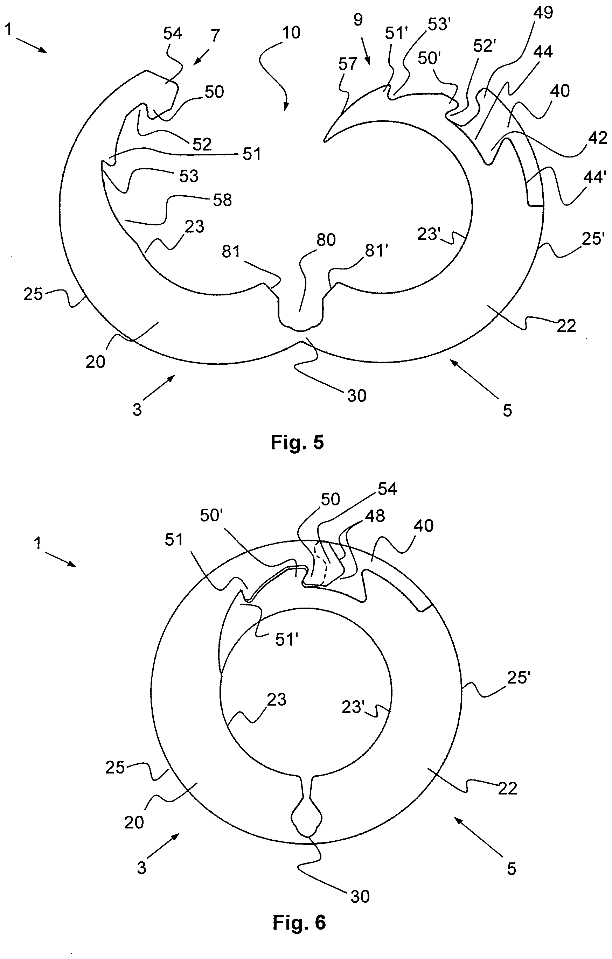

In den Figuren 3 bis 6 ist ein zweites Ausführungsbeispiel des erfindungsgemäßen Rohrs gezeigt, dass in Form und Funktionsweise dem ersten Ausführungsbeispiel sehr ähnlich ist. Es unterscheidet sich vom ersten Ausführungsbeispiel dadurch, dass die beiden Fügeränder 7, 9 jeweils zwei in Umfangsrichtung aufeinander folgende Widerhaken oder Rastnasen 50, 51 50', 51' ausbilden. Des Weiteren sind entsprechende Hinterschnitte 52, 53 52', 53' formkomplementär zum jeweiligen gegenüberliegenden Rastnasen und Gegenrastnasen 52', 53' 52, 53 ausgebildet.

Der Anlaufabschnitt 57 der Halbschale 22 verjüngt sich bei diesem Ausführungsbeispiel unter stetiger Reduzierung der Wandstärke zu einer Pfeilspitze. Aufgrund der geringen Wandstärke im Randbereich des Angleitabschnitts 57 kann dieser beim Schließen des Rohrs 1 an der Innenwand 23 der gegenüberliegenden Schale 20 entlang gleiten, bis es zu einem Rasteingriff zwischen den Rastnasen 50, 50' 51, 51' und Gegenrastnasen kommt. Dabei kann der Anlaufabschnitt 57 so ausgestaltet werden, dass dieser dem zum Einschnappen bereitgestellten Raum der Einrastöffnung 58 im Montagezustand vollständig ausfüllt.

Im geschlossenen Zustand ist im Fügestellenbereich zwischen den Halbschalen 20, 22 somit gewährleistet, dass die Halbschalen stufenlos ineinander übergehen, so dass eine kontinuierliche kreisförmige Innenwandung gebildet ist.

Um ein Verschwenken der Halbschalen über die Einrastposition hinaus zu erlauben, ist an den Halbschalen im Bereich des Schwenkgelenks oder Scharniers 30, das durch eine Materialaussparung 80 gebildet ist, an jeder Halbschale 20, 22 eine Schrägfläche 81, 81' derart ausgebildet, dass eine Rotation der Halbschalen über die Schließstellung hinaus ermöglicht ist. Die Schrägfläche ist zu einer Lotrechten bezüglich der Umfangsrichtung winkelig ausgeformt, so dass sich im Querschnitt betrachtet eine Trichterform oder Y-Form ergibt.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Rohr
- 3, 5: Rohrsegmente
- 7,9: Fügeränder
- 10: Kabeleinlegeöffnung
- 20, 22: Halbschalen
- 23, 23': Rohrinnenwandabschnitte
- 25, 25': Rohraußenwandabschnitte
- 30: Scharnier
- 40: Dichtung
- 42: Befestigungshinterschnitt
- 44: Innenstufe
- 44': Außenstufe
- 48: Dichtkontaktabschnitt
- 49: Dichtlippe
- 50, 50', 51, 51': Rastnasen
- 52, 52', 53, 53': Hinterschnitt
- 54: Eindrücknase
- 58: Einrastöffnung
- 80: Aussparung
- 81, 81': Schrägfläche

## Patentansprüche

1. Kabelschutzrohr (1) zum Aufnehmen von Kabeln, wie elektrische Leitungen, Glasfaserleitungen oder Lichtwellenleiter, umfassend zwei Rohrsegmente (3, 5), die in einem offenen Vormontagezustand freie Fügeränder (7, 9) aufweisen und aus dem Vormontagezustand in einen Montageendzustand verbringbar sind, in dem die Fügeränder zum Bilden des geschlossenen Kabelschutzrohrs (1) aneinandergefügt sind, , **dadurch gekennzeichnet, dass** an einem der Fügeränder (7, 9) eine Dichtung (40) vorgesehen ist, die zumindest abschnittsweise die Außenseite des Kabelschutzrohres (1) bildet, wobei eines der Rohrsegmente (3, 5) eine zum Äußeren des Kabelschutzrohrs (1) hin frei liegende Aufnahme für die Dichtung (40) aufweist, wobei die Aufnahme für die Dichtung durch wenigstens einen Abschnitt reduzierter Wandstärke eines der Rohrsegmente gebildet ist und dass das eine Rohrsegment (3,5) einen Übergreiffügerand und dass das andere Rohrsegment (3,5) einen Untergreiffügerand umfasst, die im Montagezustand derart ineinandergreifen, dass an der Außenseite des Kabelschutzrohrs (1) ein im Wesentlichen ideal-zylindrischer Übergang zwischen den Rohrsegmenten (3,5) gebildet ist und dass die Rohrsegmente (3,5) einen im Wesentlichen ideal-zylindrischen Kabelaufnahmeraum begrenzen.

2. Kabelschutzrohr (1) nach Anspruch 1, **dadurch gekennzeichnet, dass** die Dichtung (40) mit den Rohrsegmenten (3, 5) einstückig ausgebildet, vorzugsweise in einem Zwei-Komponenten-Spritzgussverfahren angespritzt, ist.

3. Kabelschutzrohr (1) nach Anspruch 1 oder 2, **dadurch gekennzeichnet, dass** die Dichtung (40) parallel zu den Fügerändern (7, 9) und/oder der Längsachse des Kabelschutzrohrs (1) verläuft.

4. Kabelschutzrohr (1) nach einem der Ansprüche 1 bis 3, **dadurch gekennzeichnet, dass** eine Aufnahme für die Dichtung durch zwei Abschnitte reduzierter Wandstärke eines der Rohrsegmente gebildet ist, wobei die zwei Abschnitte reduzierter Wandstärke eine Innenstufe (44) und Außenstufe (44') eines Stufenprofils in der Wandung des Rohrsegments ausbilden, zwischen denen insbesondere ein Hinterschnitt (42) ausgebildet ist, und/oder ein durch die Dichtung (40) gebildeter Außenseitenbereich des Rohres (1) in einen durch ein Rohrsegment gebildeten Außenseitenbereich des Rohres kontinuierlich, vorzugsweise stetig, übergeht.

5. Kabelschutzrohr (1) nach einem der vorstehenden Ansprüche **dadurch gekennzeichnet, dass** das Kabelschutzrohr (1) ein die zwei Rohrsegmente (3, 5) beweglich koppelndes Scharnier (30) umfasst, das die Fügeränder (7, 9) auf einer vordefinierten Schwenkbahn in den Montageendzustand führt.

6. Kabelschutzrohr (1) nach Anspruch 5, **dadurch gekennzeichnet, dass** die zwei Rohrsegmente (3, 5) und das Scharnier (30) aus einem Stück gefertigt, insbesondere als ein Kunststoffstück gespritzt, sind und/oder die zwei Rohrsegmente (3, 5) kreisbogenförmige Teilschalen, vorzugsweise Halbschalen (20, 22) sind.

7. Kabelschutzrohr (1) nach einem der Ansprüche 5 oder 6, **dadurch gekennzeichnet, dass** die zwei Rohrsegmente (3, 5) jeweils einen der Fügeränder (7, 9) zum Befestigen der Rohrsegmente aneinander aufweisen, der sich im Wesentlichen parallel zur Längsachse des Kabelschutzrohrs (1) erstreckt, und/oder wenigstens einer der Fügeränder (7, 9) jeweils wenigstens eine Rastnase (50, 51, 50', 51') aufweist, die insbesondere mit einer Gegenrastnase des anderen Fügerands (7, 9) derart formkomplementär ausgebildet ist, dass die Rastnasen (50, 51, 50', 51') im Montageendzustand verriegelnd verhakt sind.

8. Kabelschutzrohr (1) nach einem der Ansprüche 5 bis 7, **dadurch gekennzeichnet, dass** das Scharnier (30) durch ein Deformationsband, wie ein Filmscharnier, gebildet ist, das die zwei Rohrsegmente (3, 5) im Vormontagezustand stabil aneinander koppelt und im Montageendzustand plastisch - elastisch deformiert ist, und/oder dass das Scharnier (30) im Montageendzustand den Rohrsegmenten (3, 5) elastische Rückstellkräfte mitteilt, die in Umfangsrichtung wirken und/oder die sich verhakenden Fügeränder (7, 9) auseinanderziehen, wobei insbesondere die Rastnasen (50, 51, 50', 51') der Fügeränder (7, 9) ineinander greifen, um die elastischen Rückstellkräfte zu erhalten.

9. Kabelschutzrohr (1) nach einem der Ansprüche 5 bis 8, **dadurch gekennzeichnet, dass** das Scharnier (30) eine Materialstärke von weniger als einem Drittel, vorzugsweise weniger als etwa einem Viertel, der Wandstärke des Kabelschutzrohres (1) aufweist und/oder die Schwenkbahn durch die Schwenkachse des Scharniers (30) definiert ist, die insbesondere parallel zu den Fügerändern (7, 9) und/oder zur Längsachse des Kabelschutzrohrs (1) verläuft, und/oder das Scharnier (30) im Vormontagezustand eine sich längs des Kabelschutzrohrs (1) erstreckende Kabeleinlegeöffnung (10) definiert, deren Öffnungsbreite größer als der Innendurchmesser des geschlossenen Kabelschutzrohrs (1) ist, wobei insbesondere die Kabeleinlegeöffnung (10) durch die freien Fügeränder der zwei Rohrsegmente (3,5) begrenzt ist.

10. Kabelschutzrohr (1) nach einem der Ansprüche 5 bis 9, **dadurch gekennzeichnet, dass** das Kabelschutzrohr (1) ein Scharnier (30) aufweist, das beim Verbringen der zwei Rohrsegmente (3, 5) von dem Vormontagezustand in den Montageendzustand derart plastisch-elastisch verformt wird, dass im Montageendzustand die aneinander gefügten Fügeränder (7, 9) auseinander gezogen werden.

11. Kabelschutzrohr (1) nach einem der Ansprüche 5 bis 10, **dadurch gekennzeichnet, dass** ein Übergreiffügerand des einen Rohrsegments (3, 5) bzw. ein Untergreiffügerand des anderen Rohrsegments (3, 5) derart bezüglich der Schwenkbahn unterdimensioniert bzw. überdimensioniert sind, dass im Montageendzustand einer der ineinandergefügten Fügeränder (7, 9) bezüglich der vordefinierten Schwenkbahn in Radialrichtung elastisch geweitet bzw. gestaucht ist.

12. Kabelschutzrohr (1) nach einem der Ansprüche 5 bis 11, **dadurch gekennzeichnet, dass** im Montageendzustand einer der Fügeränder (7, 9) aus der Schwenkbahn ausgelenkt ist, so dass beim Einnehmen des Montageendzustands die Rohrsegmente (3, 5) elastisch nach radial außen geweitet und nach radial innen gestaucht werden, und/oder dass die Rohrsegmente an den sich zuzuwendenden Fügerändern (7, 9) jeweils wenigstens eine Rastnase (50, 50', 51, 51') und wenigstens einen Anlaufabschnitt (57) ausbilden, wobei zum gegenseitigen Eingriff der Rastnasen die Fügeränder an deren Anlaufabschnitten entlang in eine Einrastposition gleiten, wobei insbesondere der wenigstens eine Anlaufabschnitt relativ zur Schwenkbahn geneigt ist.

13. Kabelschutzrohr (1) nach einem der vorstehenden Ansprüche, **dadurch gekennzeichnet, dass** im Montageendzustand der Rohraußendurchmesser im Bereich der Fügeränder dem Rohraußendurchmesser im übrigen Umfangsverlauf des Kabelschutzrohrs (1) entspricht, und/oder die Wandstärke des Kabelschutzrohrs (1) im Bereich der Fügeränder der Wandstärke eines jeweiligen Rohrsegments (3, 5) jenseits der Fügeränder entspricht.

14. Kabelschutzrohr (1) nach einem der vorstehenden Ansprüche, **dadurch gekennzeichnet, dass** die Rohrsegmente (3, 5) jeweils eine das Rohrinnere begrenzende Innenwandung (23, 23') sowie eine dem Rohräußeren zugewandte Außenwandung (25, 25') ausbilden, wobei die Innenwandungen (23, 23') und/oder die Außenwandungen (25, 25') der Rohrsegmente (3,5) im Montageendzustand im Bereich des Fügerands stufenlos ineinander übergehen, wobei insbesondere die Innenwandungen vorsprungsfrei ausgebildet sind.

## Claims

1. A cable protection tube (1) for receiving cables, such as electric wires, fiber-optic cables or optical fibers, comprising two tube segments (3, 5) which define free joining edges (7, 9) in a pre-assembly state and are movable from the pre-assembly state into an assembly end state in which the free joining edges are joined together for forming the closed cable protection tube (1), **characterized in that** one of the joining edges (7, 9) comprise a sealing (40) that forms at least sectionwise the outside of the cable protection tube (1), wherein one of the tube segments (3, 5) comprises a seating for the sealing (40) that exposes to the external of the cable protection tube (1), wherein the seating for the sealing is formed by at least one section of one of the tube segments with reduced wall thickness, and that one of the tube segments (3, 5) comprises an over-gripping joining edge, and that the other tube segment (3, 5) comprises an under-gripping joining edge, wherein in the assembly state, said joining edges interlock such that a substantially ideal-cylindrical crossover is formed between the tube segments (3, 5) at the outside of the cable protection tube (1), and that the tube segments (3, 5) restrict a substantially ideal-cylindrical cable receiving room.

2. A cable protection tube (1) according to claim 1, **characterized in that** the sealing (40) is integrally formed with the tube segments (3, 5), preferably injected to it in a two-component-injection molding process.

3. A cable protection tube (1) according to claim 1 or 2, **characterized in that** the sealing (40) extends parallel to the joining edges (7, 9) and/or to the longitudinal axis of the cable protection tube (1).

4. A cable protection tube (1) according to one of the claims 1 to 3, **characterized in that** a seating for the sealing is formed by two sections with reduced wall thickness of one of the tube segments, wherein the two sections with reduced wall thickness form an inner step (44) and an outer step (44') of a stepped profile in the wall of the tube segments in between of which an undercut (42) is formed, and/or an outside area of the tube (1) that is formed by the sealing (40) merges continuously, preferably steadily, into an outside area of the tube that is formed by a tube segment.

5. A cable protection tube (1) according to one of the preceding claims, **characterized in that** the cable protection tube (1) comprises a hinge (30) that movably couples the two tube segments (3, 5), wherein the hinge guides the joining edges (7, 9) along a predefined pivoting path into the assembly end state.

6. A cable protection tube (1) according to claim 5, **characterized in that** the two tube segments (3, 5) and the hinge (30) are integrally formed, particularly injected as one plastic piece, and/or the two tube segments (3, 5) are circular-arc shaped partial-shells, preferably half-shells (20, 22).

7. A cable protection tube (1) according to one of the claims 5 or 6, **characterized in that** each of the two tube segments (3, 5) comprise one of the joining edges (7, 5) to attach the tube segments to each other that substantially extends parallel to the longitudinal axis of the cable protection tube (1), and/or at least one of the joining edges (7, 9) comprises respectively at least one latching lug (50, 51, 50', 51') which is particularly formed form-complementary to a counter latching lug of the other joining edge (7, 9) such that in the assembly end state, the latching lugs (50, 51, 50', 51') are entangled in a latching manner.

8. A cable protection tube (1) according to one of the claims 5 to 7, **characterized in that** the hinge (30) is formed by a deformation ribbon, as a film hinge, which stably couples the two tube segments (3, 5) to each other in the pre-assembly state and which is plastically-elastically deformed in the assembly end state, and/or **in that** in the assembly end state, the hinge (30) induces elastic restoring forces to the tube segments (3, 4) which act in circumferential direction and/or which pull apart the joining edges (7, 9) entangling each other, wherein in particular the latching lugs (50, 51, 50', 51') of the joining edges (7, 9) interlock to receive the elastic restoring forces.

9. A cable protection tube (1) according to one of the claims 5 to 8, **characterized in that** the hinge (30) has a material thickness of less than a third, preferably of less than about a fourth, of the wall thickness of the cable protection tube (1), and/or the pivoting path is defined by the pivoting axis of the hinge (30) which particularly extends parallel to the joining edges (7, 9) and/or to the longitudinal axis of the cable protection tube (1), and/or in the pre-assembly state, the hinge (30) defines a cable insertion opening (10) extanding longitudinal to the cable protection tube (1), wherein the opening width is larger than the inner diameter of the closed cable protection tube (1), wherein in particular the cable insertion opening (10) is restricted by the free joining edges of the two tube segments (3, 5).

10. A cable protection tube (1) according to one of the claims 5 to 9, **characterized in that** the cable protection tube (1) comprises a hinge (30) which by moving the two tube segments (3, 5) from the pre-assembly state into the assembly end state becomes plastically-elastically deformed in such a way that in the assembly end state, the joining edges (7, 9) being joined to each other become pull apart.

11. A cable protection tube (1) according to one of the claims 5 to 10, **characterized in that** an over-gripping joining edge of one of the tube segments (3, 5) respectively an under-gripping joining edge of the other tube segment (3, 5) are undersized respectively oversized with respect to the pivoting path in such a way that in the assembly end state, one of the joining edges (7, 9) which are joined together is elastically expanded respectively compressed in radial direction with respect to the predefined pivoting path.

12. A cable protection tube (1) according to one of the claims 5 to 11, **characterized in that** in the assembly end state, one of the joining edges (7, 9) is deflected from the pivoting path such that, when engaging the assembly end state, the tube segments (3, 5) become elastically expanded radially to the outside and compressed radially to the inside, and/or **in that** each of the tube segments form at the joining edges (7, 9) which should turn towards each other at least one latching lug (50, 51, 50', 51') and at least one start-up section (57), wherein the joining edges slide along their start-up sections into a latching position to mutually interlock the latching lugs, wherein in particular the at least one start-up section is inclined relative to the pivoting path.

13. A cable protection tube (1) according to one of proceeding claims, **characterized in that** in the assembly end state, the outer diameter of the tube in the area of the joining edges corresponds to the outer diameter of the tube in the further circumferential course of the cable protection tube (1), and/or the wall thickness of the cable protection tube (1) in the area of the joining edges corresponds to the wall thickness of the respective tube segment (3, 5) beyond the joining edges.

14. A cable protection tube (1) according to one of the proceeding claims, **characterized in that** each of the tube segments (3, 5) forms one inner wall (23, 23') that restricts the inside of the tube and one outer wall (25, 25') that faces the outside of the tube, wherein in the assembly end state, the inner walls (23, 23') and/or the outer walls (25, 25') of the tube segments (3, 5) merge steplessly into each other in the area of the joining edge, wherein in particular the inner walls are formed without protrusions.

## Revendications

1. Tube protège-câble (1) destiné à recevoir des câbles, comme des câbles électriques, des câbles en fibre de verre ou des câbles en fibre optique, comprenant deux segments de tube (3, 5) qui présentent, dans un état de pré-montage ouvert, des bords de jonctions libres (7, 9) et peuvent être amenés, en partant de l'état de pré-montage, dans un état de montage final dans lequel les bords de jonction sont assemblés pour constituer le tube protège-câble fermé (1), **caractérisé en ce qu'**il est prévu au niveau d'un des bords de jonction (7, 9) un joint (40) qui forme au moins par sections la face extérieure du tube protège-câble (1), un des segments de tube (3, 5) présentant un support dégagé vers l'extérieur du tube protège-câble (1) pour le joint (40), le support pour le joint étant formé par au moins une section à épaisseur de paroi réduite d'un des segments de tube et **en ce qu'**un segment de tube (3, 5) présente un bord de jonction en chevauchement et que l'autre segment de tube (3, 5) comprend un bord de jonction sous-jacent qui, à l'état de montage, s'engrènent l'un dans l'autre de manière à ce que, au niveau de la face extérieure du tube protège-câble (1), une transition sensiblement cylindrique dans l'idéal entre les segments de tube (3, 5) soit établie et que les segments de tube (3, 5) délimitent un espace récepteur de câble sensiblement cylindrique dans l'idéal.

2. Tube protège-câble (1) selon la revendication 1, **caractérisé en ce que** le joint (40) forme une seule pièce avec les segments de tube (3, 5) et est de préférence injecté dans un procédé d'injection bi-composant.

3. Tube protège-câble (1) selon la revendication 1 ou 2, **caractérisé en ce que** le joint (40) est orienté parallèlement au bord de jonction (7, 9) et/ou à l'axe longitudinal du tube protège-câble (1).

4. Tube protège-câble (1) selon une des revendications 1 à 3, **caractérisé en ce qu'**un support pour le joint est constitué par deux sections à épaisseur de paroi réduite d'un des segments de tube, les deux sections à épaisseur de paroi réduite formant un niveau intérieur (44) et un niveau extérieur (44') d'un profilé de niveau dans la paroi du segment de tube et contre lesquelles est pratiquée en particulier une contre-dépouille (42) et/ou qu'une zone de face extérieure constituée par le joint (40) du tube (1) transite, de préférence en permanence, dans une zone de face extérieure constituée par un segment de tube (1).

5. Tube protège-câble (1) selon une des revendications, **caractérisé en ce que** le tube protège-câble (1) comprend une charnière (30) couplant de manière mobile les deux segments de tube (3, 5) et qui amène les bords de jonction (7, 9) dans l'état de montage final sur une piste de pivotement prédéfinie.

6. Tube protège-câble (1) selon la revendication 5, **caractérisé en ce que** les deux segments de tube (3, 5) et la charnière (30) sont fabriqués en une seule pièce, en particulier sous forme d'une pièce en plastique et/ou que les deux segments de tube (3, 5) sont des parties de coque de forme circulaire, de préférence des demi-coques (20, 22).

7. Tube protège-câble (1) selon une des revendications 5 ou 6, **caractérisé en ce que** les deux segments de tube (3, 5) présentent respectivement un des bords de jonction (7, 9) permettant la fixation des segments de tube entre eux et qui s'étend sensiblement parallèlement à l'axe longitudinal du tube protège-câble (1) et/ou qu'au moins un des bords de jonction (7, 9) présente respectivement au moins un bec d'enclenchement (50, 51, 50', 51') qui est réalisé en particulier de manière à avoir une forme complémentaire à celle d'une contre-dépouille des becs d'enclenchement de l'autre bord de jonction (7, 9) telle que les becs d'enclenchement (50, 51, 50', 51') accrochés ensemble soient bloqués en état de montage final.

8. Tube protège-câble (1) selon une des revendications 5 à 7, **caractérisé en ce que** la charnière (30) est constituée par une bande déformable, comme une charnière en film, qui couple les deux segments de tube (3, 5) ensemble d'une manière stable à l'état de pré-montage et, à l'état de montage final, est déformée élastiquement et plastiquement, et/ou que la charnière (30), à l'état de montage final, communique aux segments de tube (3, 5) des forces de rappel élastiques qui agissent dans le sens circonférentiel et/ou écartent les bords de jonction accrochés ensemble (7, 9), les becs d'enclenchement (50, 51, 50', 51') des bords de jonction (7, 9) s'engrenant en particulier les uns dans les autres afin de d'obtenir les forces de rappel élastiques.

9. Tube protège-câble (1) selon une des revendications 5 à 8, **caractérisé en ce que** la charnière (30) a une épaisseur de paroi représentant moins d'un tiers, de préférence moins d'un quart, de l'épaisseur de paroi du tube protège-câble (1) et/ou que la piste de pivotement est définie par l'axe de pivotement de la charnière (30) qui est orienté en particulier parallèlement aux bords de jonction (7, 9) et/ou à l'axe longitudinal du tube protège-câble (1) et/ou que la charnière (30), dans l'état de pré-montage, définit un orifice d'insertion de câble (10) s'étendant le long du tube protège-câble (1) et dont la largeur d'ouverture est supérieure au diamètre intérieur du tube protège-câble fermé (1), l'orifice d'insertion de câbles (10) étant en particulier limité par les bords de jonction libres des deux segments de tube (3, 5).

10. Tube protège-câble (1) selon une des revendications 5 à 9, **caractérisé en ce que** le tube protège-câble (1) présente une charnière (30) qui, lorsque les deux segments de tube (3, 5) sont passés de l'état de pré-montage à l'état de montage final, se déforme plastiquement et élastiquement de manière à ce que, dans l'état de montage final, les bords de jonction assemblés ensemble (7, 9) soient écartés l'un de l'autre.

11. Tube protège-câble (1) selon une des revendications 5 à 10, **caractérisé en ce qu'**un bord en chevauchement d'un segment de tube (3, 5) ou un bord sous-jacent de l'autre segment de tube (3, 5) sont sous-dimensionnés ou surdimensionnés par rapport à la piste de pivotement de manière à ce que, dans l'état de montage final, un des bords de jonction imbriqués (7, 9) soit élargi ou tassé élastiquement par rapport à la piste de pivotement prédéfinie dans le sens radial.

12. Tube protège-câble (1) selon une des revendications 5 à 11, **caractérisé en ce que**, dans l'état de montage final, un des bords de jonction (7, 9) est dévié de la piste de pivotement de sorte que, lors du passage à l'état de montage final, les segments de tube (3, 5) soient élargis radialement vers l'extérieur et tassés radialement vers l'intérieur élastiquement et/ou que les segments de tube constituent, au niveau des bords de jonction destinés à se tourner les uns vers les autres (7, 9), respectivement au moins un bec d'enclenchement (50, 50', 51, 51') et au moins une section d'arrivée (57), sachant que, pour l'engrènement mutuel des becs d'enclenchement, les bords de jonction glissent le long de leurs sections d'arrivée vers une position d'enclenchement, l'au moins une section d'arrivée étant en particulier inclinée le par rapport à la piste de pivotement.

13. Tube protège-câble (1) selon une des revendications précédentes, **caractérisé en ce que**, dans l'état de montage final, le diamètre extérieur du tube équivaut, au niveau des bords de jonction, au diamètre extérieur du tube dans le reste de l'extension circonférentielle du tube protège-câble (1) et/ou que l'épaisseur de paroi du tube protège-câble (1) équivaut, au niveau des bords de jonction, à l'épaisseur de paroi d'un segment de tube respectif (3, 5) au-delà des bords de jonction.

14. Tube protège-câble (1) selon une des revendications précédentes, **caractérisé en ce que** les segments de tube (3, 5) constituent respectivement une paroi intérieure (23, 23') limitant l'intérieur du tube et une paroi extérieure (25, 25') tournée vers l'extérieur du tube, les parois intérieures (23, 23') et/ou les parois extérieures (25, 25') des segments de tube (3, 5) transitant progressivement l'une dans l'autre dans l'état de montage final au niveau du bord de jonction, les parois intérieures étant en particulier réalisées sans saillie.
